# EUROPEAN PATENT SPECIFICATION

(11) **EP 1 238 773 B1**
(45) Date of publication and mention of the grant of the patent: **02.11.2005**
(21) Application number: 00962543.5
(22) Date of filing: 12.09.2000
(51) Int. Cl.: B29C 33/76, B29C 45/14

(54) **SYSTEM FOR OVERMOLDING TUBES IN PLASTIC PARTS**
VERFAHREN ZUM ÜBERSPRITZEN VON RÖHREN IN KUNSTSTOFFTEILEN
SYSTEME DE SURMOULAGE DE TUBES DESTINE A LA FORMATION DE PIECES EN PLASTIQUE

(43) Date of publication of application: 11.09.2002
(73) Proprietor: FPK S.A., 48170 Zamudio (ES)
(72) Inventor: MARTINEZ CUE, Javier, E-48013 Bilbao (ES)
(74) Representative: Urteaga Simarro, José Antonio
(86) International application number: PCT/ES2000/000340
(87) International publication number: WO 2002/022338

(56) References cited:
- ES-T- 2 082 961
- FR-A- 2 638 672
- GB-A- 997 552
- US-A- 5 942 169

## Description

This invention relates to a system for overmoulding, surface moulding or surface coating tubes in order to produce plastic parts that include the said tube for use in different industrial applications, for instance in the automotive industry, among others.

It is well know that tubes and closed profiles provide a high degree of rigidity because they have a higher moment of inertia in comparison to equivalent open profiles, and therefore these tubes are used for manufacturing plastic parts moulded onto this kind of tube in such a way that the tube is totally or partially covered.

In order to carry out the overmoulding of tubes, these are inserted into the mould and arranged on supports in the interior of the moulds so as to later perform the filling with plastic material, with which the tube is secured to the plastic structure in question.

In this way, much higher levels of rigidity and strength are achieved in the final product than those achieved by means of traditional bolting, riveting, flanging, etc. connection systems, between the plastic component and the reinforcing tube.

In addition to this, the second operations described above are eliminated, since the connection between the plastic and the tube is carried in the same mould filling operation.

In this treatment, there should not be any holes that might allow the plastic to penetrate inside the profile and therefore the tube must be leak-tight during the overmoulding, so that if holes or perforations are needed as fixing points for the product, the mould will be provided with the corresponding closure areas that prevent the material from penetrating into the interior of the tube through these holes, while it is also possible to make holes in a second operation after the moulding of the part.

This technique of overmoulding tubes in order to obtain plastic parts, which has been suggested on the market as useful so as to obtain these parts in an acceptable way, has also raised the need to use tubes of the thinnest possible thickness in order to achieve a lower weight and lower cost in the finished product especially in the automotive industry.

However, the difficulty for this technique arises from the strong pressures created in the interior of the mould for filling the cavity with the plastic material, so that depending on several process parameters, the shape of the part, the thickness and shape of the tube, etc. the tube might become deformed, locally collapsed or squashed by the pressure of the material when the cavity is filled.

The solution of using stronger tubes, or tubes made of more rigid or tougher material, obviously more expensive and heavier, goes against what has been previously stated.

On carrying out experimental tests with different tubes of the lowest thicknesses possible, several ways in which the tube becomes damaged by the effect of the pressure have been found, and these are listed from least to most serious.
- The tube becomes deformed, following the supports in the mould or matrix.
- The tube collapses, becoming deformed locally towards its interior.
- The said deformations exceed the breaking point of the material that the tube is made of, with the plastic penetrating into the interior of the profile.
- The tube is completely squashed against the mould.

The consequences caused by these failures in the part, listed from most to least serious, are as follows:
- Deformations created by residual stresses, which affect the dimensional stability and therefore the quality of the product.
- Local deformations, especially in metal tubes, can affect the strength of the part.
- Lack of filling in the part to be produced, since the material fills the gap in the tube and does not reach the end of the cavity, which makes it defective and unstable as a process.
- Strong distortion of the strength and of its properties where the collapse of the tube has taken place.

The basic objective of the invention is to provide a system for overmoulding tubes in the manufacture of plastic parts, with low wall thicknessses in these tubes, according to which the previously mentioned disadvantages are overcome.

Another object of the invention is to provide a system which is applicable to tubes of different cross sections and geometric paths.

Another object of the invention is to provide a device in order to perform the system that is proposed.

In order to put these objectives into practice, the invention claims a system, according to which means of support are provided to the internal walls of the tube when it is being overmoulded, which are fully capable of neutralising the pressure caused on the exterior of the tube by the plastic material, while maintaining its thickness and, logically, its shape, unchanged.

The means for neutralising the overpressure of the plastic material are moveable or displaceable, i.e. they are situated in the interior of the tube before moulding and are extracted after it, and when they are located in the interior, the ends are closed off, so that they make the said interior space leak-tight and prevent the entry of the plastic material during moulding.

The said means consist of physical means which fit against the internal walls of the tube, maintaining a pressure against these walls during the overmoulding and at least during a part of the polymerisation of the plastic mass that is around the tube.

In a preferred solution, the means of support are composed of some segments mounted on a mandrel, with these segments being provided with expansion and contraction movements, so that their outer surface fits to the internal surface of the tube or moves away from it.

The segments are arranged in groups along the mandrel, for instance in groups of four, and the outer surface of these segments is of a circular shape. The groups of segments are situated adjacent to each other, covering the entire length of the mandrel.

The mandrel is situated on the base of a hollow tubular body, which is fixed by one end to a support. Through the interior of this tubular body there is a hollow tube and a shaft, concentric with each other, both of which are of a greater length than the said tubular body, with the shaft being longer than the tube, and with both protruding from the support of the tubular body.

Screw threaded portions in different directions are provided at the two protruding ends, for example a left hand thread for the shaft portion and a right hand thread for the tube.

Through the exterior of the support and on it is arranged a clamping tube that turns on the said support and whose interior is partially occupied by a neck of an outer cover, with this neck being internally screw threaded. The end of the shaft is screwed into this portion and the screw-threaded end of the internal tube is connected into another screw thread in the interior of the clamping tube.

Therefore, on turning the clamping tube, the shaft and the tube move in different directions, either approaching or moving away from each other, according to the turning direction given to the clamping tube.

Both the shaft and the tube receive pairs of wedges, by way of cylindrical bushings with their exterior provided with a certain inclination. These wedges are alternated in position along the mandrel, with one wedge being operated by the shaft and the other wedge operated by the tube.

The wedges slide along the exterior of the tubular body on being operated by means of the incorporation of pins connected to the tube and to the shaft. Each pair of wedges has the inclination of its outer surfaces in opposite directions, and in harmony with the movements of the said tube and the said shaft, when the clamping tube is turned, the wedges in each pair either move closer to or away from each other.

The segment, in groups of four, for example, as mentioned, are situated floating on some rings mounted onto the tubular body and their inner surfaces have two lugs emerging from their central portion, which are taken in on the sides of the rings. From these lugs the inner surfaces are inclined in relation to the horizontal in an opening direction towards their ends.

Each group of four segments is situated on a ring and the inner surfaces of these segments receive the opposing wedges, one wedge on each surface. When the wedges slide along these surfaces, either moving closer to or away from each other, they determine whether the segments expand or contract.

Each segment also has two slots in a circular direction cut in their outer surface at the level of the internal lugs, and receive O-ring seals in each of these slots, with these seals acting as springs for each group of four segments.

Not only the tubular body, but also the ring and the internal tube are equipped with slots that allow the movement of their operating pins and set screws.

When wishing to house the mandrel in the tube, the end clamping tube is turned to the right, with which the segments contract on the moving together of the two wedges in each pair of wedges that act on the group of four segments. Once the mandrel has been received inside the tube, the clamping tube is turned in the opposite direction and the two wedges move away from each other, causing the segments to expand or open and adapt or fit to the walls of the tube.

Following this, the ends of the mandrel are closed and the moulding onto the tube can proceed without any problems, as the pressure exerted on the tube by the plastic and the mould is absorbed, thus preventing the tube from becoming deformed or collapsing.

The variation of the diameter of the mandrel can be carried out by means of rolls, spheres, etc. although the system of cylindrical segments has been found to be more advantageous, given that the segments cover a greater percentage of the internal surface of the tube, so the distribution of the stresses is more even.

With regard to the wedges used to expand the mandrel, we wish to point out that they can be replaced, as alternatives, by cams or other pneumatic or hydraulic systems.

As regards what is described previously, it is also pointed out for the appropriate purposes that the movements of the shaft and of the internal tube can be performed without the assistance of the cover, the clamping tube, etc., and without their ends being screw threaded, with the alternative movements of both being carried out by means of hydraulic or pneumatic cylinders that are connected to a common central unit and carry out the said movements of both items.

As a variant of this arrangement, it is pointed out that the described system of wedges, shaft, internal tube and tubular body can be replaced by a flexible hose arranged along the mandrel at the core of the segments, with the said segments being connected onto this hose.

When pressure is applied in the flexible tube, it dilates or expands and the segments come into contact with the interior of the tube, thus compensating for the external pressure on the tube.

The hose or flexible pipe can have some plugs and sockets or fast connectors at its ends, so that it is not necessary to fill and empty it, but simply to pressurise and depressurise it.

In some cases, for example when calibrated steel tubes are used, in which the weld has been removed or with extruded tubes, it is possible to use the flexible pipe without the covering segments, although it is considered safer to protect the hose from rubbing against possible burrs by covering it with metallic segments.

As a possible variant within the invention, it is indicated that it is feasible for the external pressure of the plastic to be compensated by the internal pressure of a liquid or a gas under pressure, in which the fluid in question is introduced through the ends of the tube.

Pressure is applied onto the tube following a curve or instruction that can be set by suitably synchronised timing, either synchronised with the closing of the press, with the pressure curve of the press or using as a signal a pressure cell located inside the mould cavity itself.

The aim of applying pressure in this case is for the difference between the internal and external pressure on the tube to be as low as possible, in order to obtain the lowest resulting pressure differential.

When the polymerisation or cooling time for the part has elapsed, the tube is depressurised. If a liquid is used, the contents of the tube will have to be drained.

In the preferred solution mentioned previously, in which the shaft and the tube move in unison, it is pointed out for the appropriate purposes that as alternatives for this system used to operate the said items, pneumatic, hydraulic and electromechanical (rack) cylinders can be applied.

An important detail for the correct operation of the system is the way in which the closure of the ends of the tube is carried out in all cases considered, because if this closure is not correctly carried out, the plastic will penetrate inside the tube.

In the case of the preferred solution, which uses the mandrel, the way of carrying out the closure of the ends of the tube must be taken into account, since the tolerance for the cutting of the tub in length and as regards perpendicularity of cut in relation to the axis, shifting square, because if the closure is not carried out correctly, the plastic will penetrate into the interior, rendering the mandrel useless.

The scope of application of the system in the invention is with any plastic, composites, polymers, rubbers, copolymers, thermoplastics or thermosets (thermostables) for example polypropylene reinforced with fibre glass in all its variants, and polyamides reinforced or not with fibre glass.

The material used for the tubes can extend to closed tubes made of steel, aluminium and any other alloy, whether ferrous or non-ferrous.

As regards the shape of the tubes, the invention is applicable to any closed section, round, square, rectangular, elliptical, etc., of any thickness.

The tubes can be straight, curved, bent or with locally squashed or deformed areas.

With regard to the shape of the plastic part to be obtained, it can be any that the different technologies used for processing plastic permit, including among these injection, compression, injection-compression, etc.

All these and other details of the invention will be appreciated on the accompanying sheets of drawings, on which the following are represented:
Figure 1 is a perspective view of a moulded plastic part, drawn as the invention proposes as its method of production.
Figure 2 is a cross section elevation of the preferred solution to carry out the system of the invention.
Figure 3 is an enlarged detail of the mandrel to be applied, in accordance with the invention.
Figure 4 shows the view of Figure 2 seen from below, with the tube in which the mandrel of the invention is inserted, with the mandrel in position fitted to the tube.
Figure 5 is a view from below of Figure 2, with the mandrel housed in the inside of the tube, but without contact with its interior.
Figure 6 is an enlarged partial view of the mandrel in Figure 2.
Figure 7 is an enlarged partial view of Figure 3.
Figure 8 is, in the same way, an enlarged partial view of Figure 4.
Figure 9 is a view from the left of Figure 2.
Figure 10 represents the position of the segments when they are expanded in relation to the tube to be moulded.
Figure 11 shows the position of the segments contracted in relation to the tube to be moulded.
Figure 12 is the representation of the result of the view along line I-I in Figure 3.
Figure 13 is the result of the view along line II-II Figure 3.
Figure 14 is the result of the view along line III-III Figure 3.
Figure 15 is the view according to the line IV-IV in Figure 6.
Figure 16 is a view of the mandrel shaft, in accordance with the invention.
Figure 17 is a view of the tubular body, in accordance with the invention.
Figure 18 is a view of the internal tube, in accordance with the invention.
Figure 19 is an elevation of the ring that receives the segments.
Figure 20 is a cross section elevation of one of the segments.
Figure 21 is an elevation of the wedge that slides along the internal tube.
Figure 22 is an elevation of the wedge moved by the shaft.

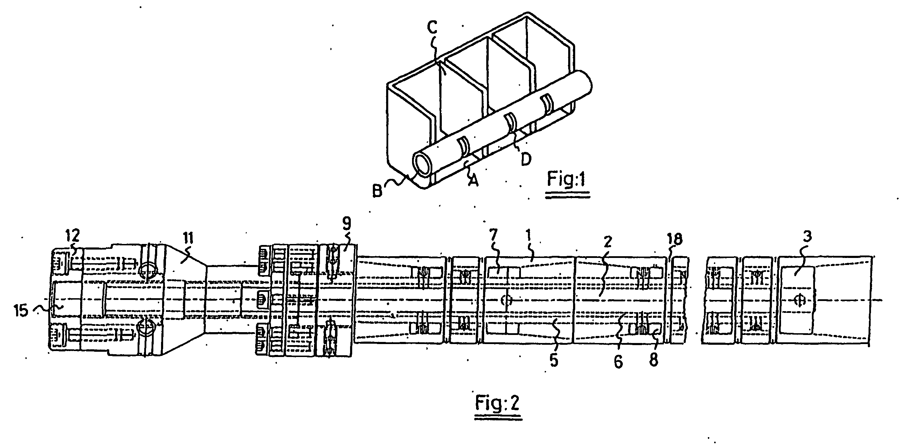

Looking now at Figure 1, we can appreciate a typical example of a part moulded in plastic (A) on an assembly (B) that includes a metal tube in its interior, with parts (C) of different shapes and portions (D) that do not receive coatings, that correspond to the supports for the tube inside the mould.

In Figure 2 we show the mandrel to be housed in the interior of the tube before the moulding operation, with the central shaft (2), the internal tube (6) and the tubular body (5). The two wedges (7, 8) are mounted onto the body (5) so that in their movements they act against the inner surfaces of the segments (1).

The shaft (2) has a screw-threaded front end (15) and the end of the internal tube (6) has another screw thread, with both being operated by the two screw threads of the cover (12) and of the clamping tube (11) mounted on the support (9) which is fixed to the body (6).

The portion that runs from the support (9) to the right end is the one that is housed in the interior of the tube to be overmoulded in order to maintain its strength.

At the right end we can appreciate the wedge (3) different from the other wedges (7, 8) established along the mandrel.

The turning of the cover (12) and of the clamping tube (11) caused the movements of the shaft (2) and of the internal tube (5), with these movements being in opposite directions due to the fact that the screw threads of the portion (15) of the shaft (1) and of the cover (12) are left handed.

In this way, the wedges (3, 7, 8) act against the segments (1), causing them to open or close, and overcoming the resistance of the seals (18) that act as springs (18).

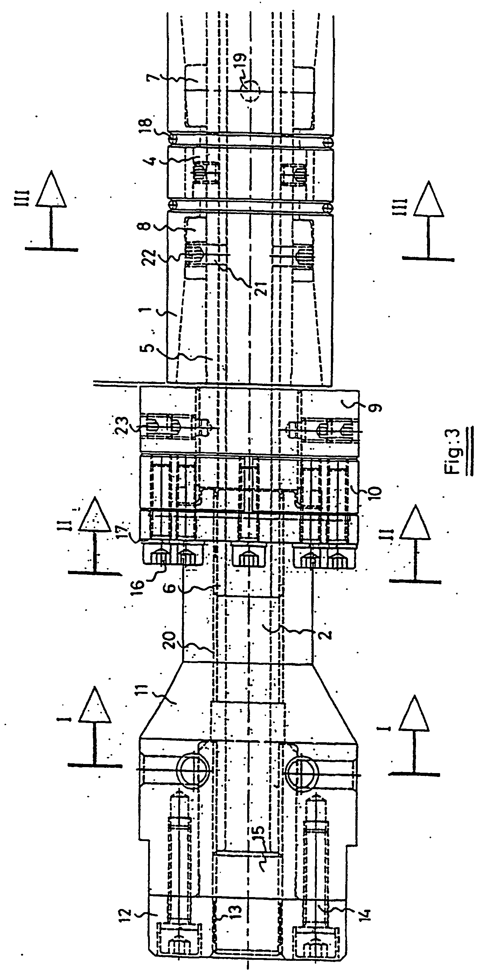

In Figure 3 we can observe a detail of the area of action of the mandrel, with the clamping tube (11) provided with the front cover (12) secured with bolts (14) and with a prolongation that turns on the support (9). The shaft (2) and the internal tube (6), which are screw threaded at their ends, are operated by the two screw-threaded portions (13, 20) of the cover (12) and clamping tube, so that if turning is to the left, the wedge (7) moves towards the right and the wedge (8) moves towards the left.

The tube (11) is connected to the support (9) by means of a clasp or lock (10) secured by means of bolts (16) and gaskets (17), with the support (9) being fixed by (23) to the body (6).

The wedges (7) are secured to the shaft (2) by the pins (19) and the wedges (8) to the internal tube (5) through the units (21, 22), and the segments (1) are housed on the body (6) by means of the ring (4).

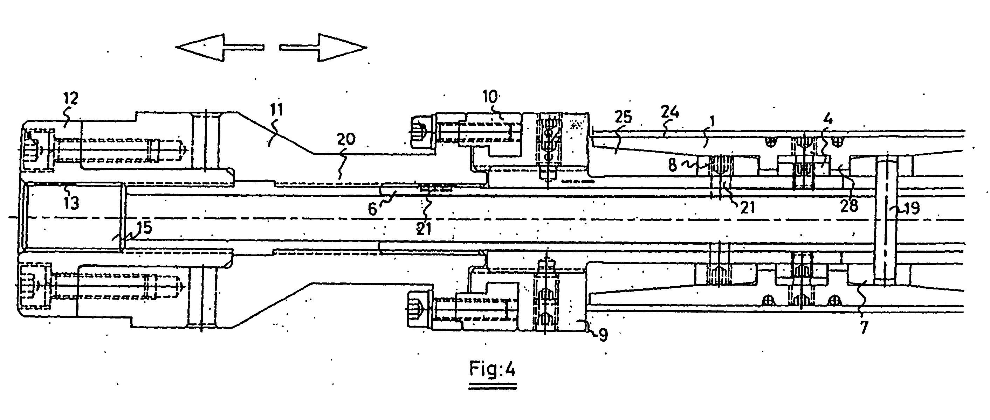

In Figure 4 we can appreciate the front part turned 45° in relation to Figure 3, showing with greater clarity the position of the clasp or lock part (10), which turns on the support (9), as well as the screw-threaded portions (13, 20) of the cover (12) and of the clamping tube (11), connected to the ends (15) of the shaft (2) and (21) of the internal tube (6).

In this Figure 4, the segments (1) are secured and in contact with the interior of the tube (24) to be overmoulded, with the wedges (7, 8) corresponding to each segment (1) in their closest position. The segments are in turn mounted floating on the ring (4) with some lugs (28) that clasp the said ring at the sides. In the same way, we can observe the pin (19) that fixes the wedge (7) to the central shaft (2).

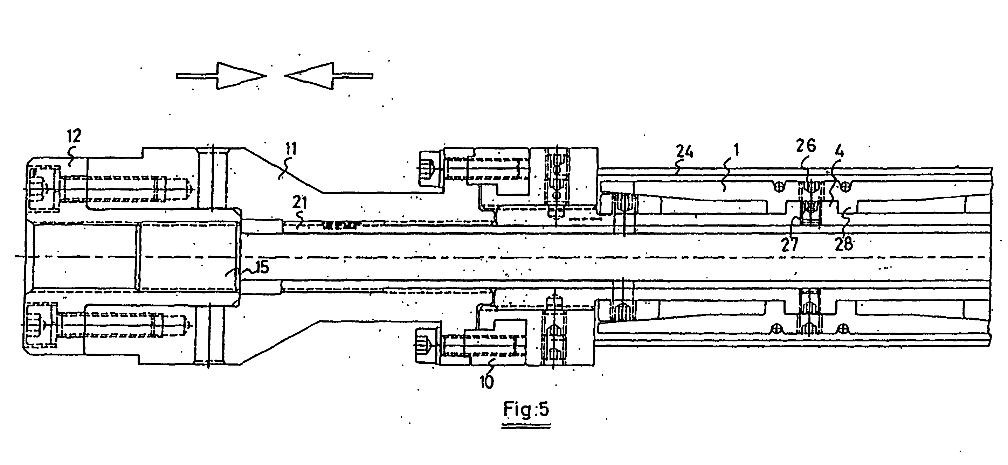

The contracted segments (1) are shown in Figure 5 when they are separated from the interior of the tube (24) by the opposite movement of the wedges. We also highlight, for definition purposes, how in this position the screw-threaded portions (15, 21) are close to each other, whereas in Figure 4 these portions are distant from each other.

The difference between these two positions will mark the distance or displacement of the wedges (7, 8) in one direction or the other, according to the turning of the clamping tube (11).

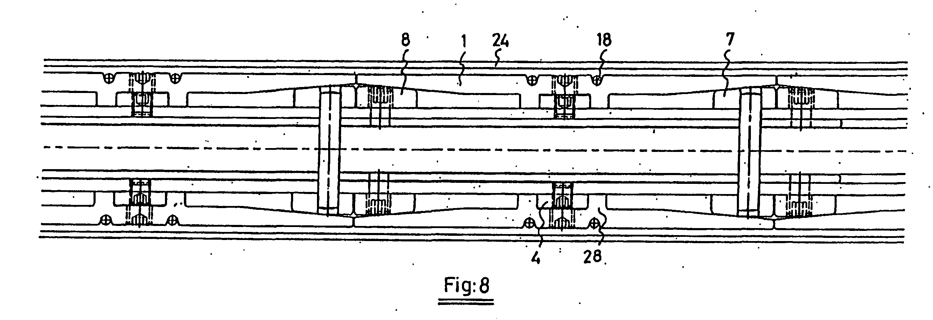

The maximum separation between the two wedges of each segment (1) is defined in Figure 8, with the segments (1) expanded and in contact with the interior of the tube (24).

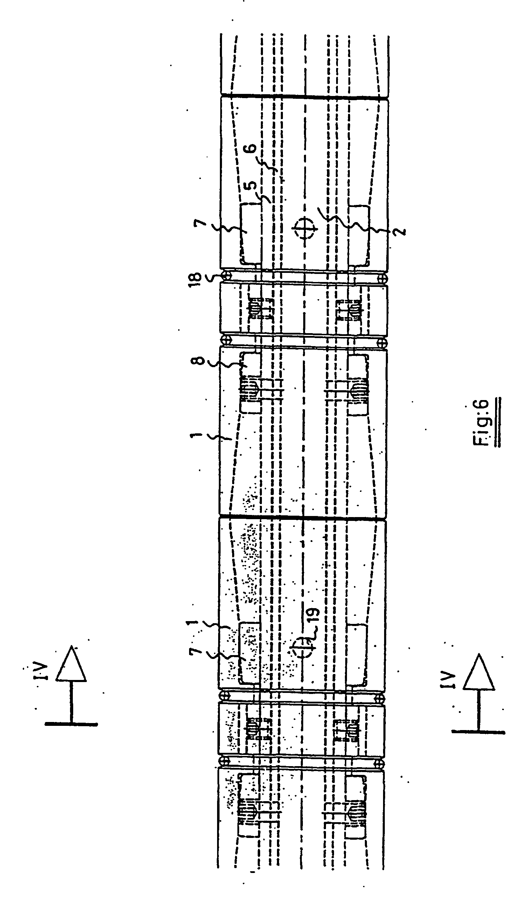

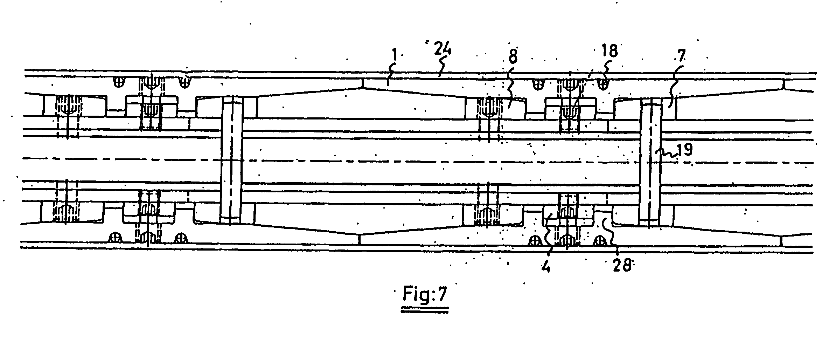

The minimum separation between wedges is shown in Figures 6 and 7, with the segments (1) contracted.

In Figure 5 we can also point out the set screw (27) that connects the ring (4) to the internal tube (6) and the entrance (26) for it.

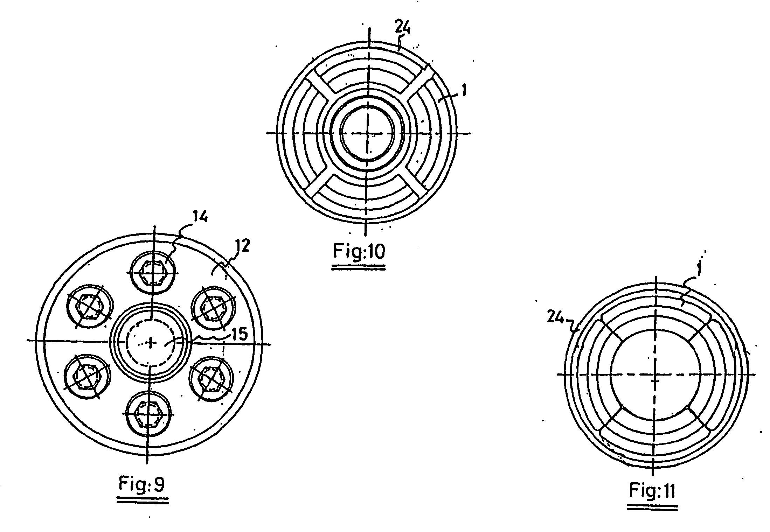

The cover (12) of the clamping tube (11) can be appreciated in Figure 9, as well as the screws for fixing together both parts and the screw-threaded end (15) of the shaft (2) connected to the said cover.

From Figures 10 and 11 we can deduce the two positions of the segments (1) in relation to the tube (5), shown contracted in Figure 10 with no contact with the tube.

The position shown in Figure 10 corresponds to that shown in Figures 5 and 8 and the position shown in Figure 11 to that of Figures 4 and 7.

The clamping tube has some diametrical slots (25), as shown in Figure 12, in order to facilitate appropriate internal lubrication of the mandrel and especially to house pins that make it easy to turn the said tube.

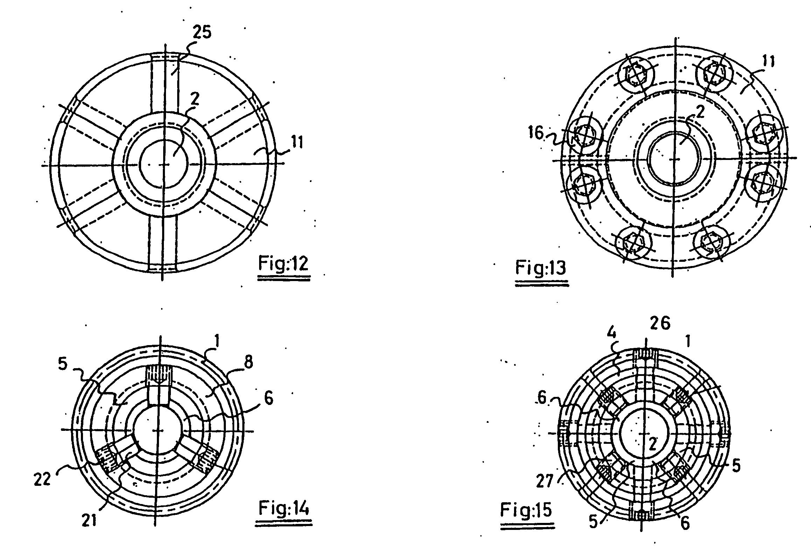

The clamping tube (11) is shown frontally in Figure 13, where the bolts (16) for fixing the said tube to the closure (10) that turns on the support (9) are also shown.

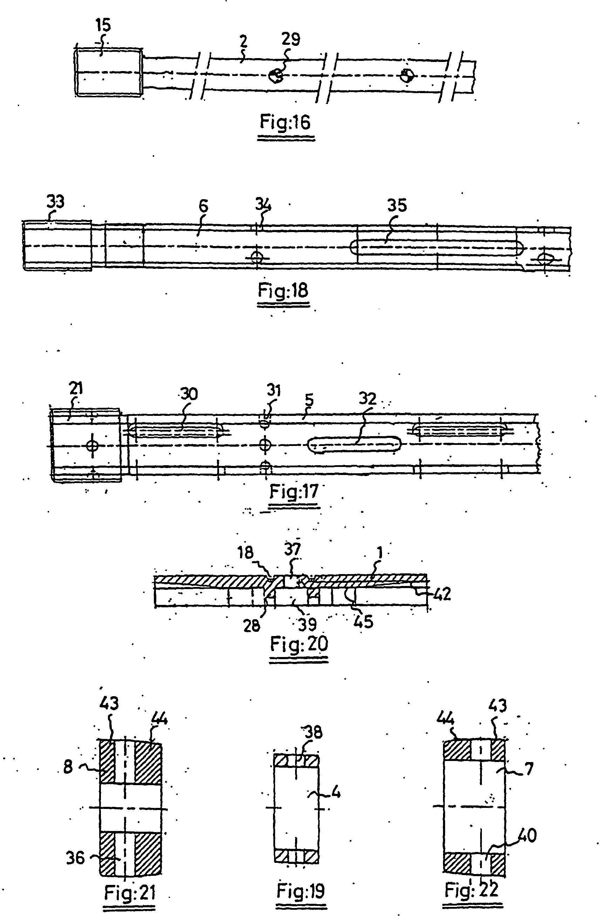

With reference to Figure 14, we can indicate the relative positions of the segments (1), the wedge (8), the tubular body (5), the internal tube (6) and the shaft (2) and how the pins (21) and set screws (22) keep the wedge (8) connected to the shaft (2), so that when the shaft is moved, the wedge (8) also moves.

Obviously, and as described previously, the wedge (7) moves with the shaft (2) thanks to the pin shown in several figures, for example in Figures 3 and 7.

The position of the ring (4) on which the segment (1) slides radially can be appreciated in Figure 15, showing here the segment (1), the tubular body (5), the internal tube (6) and the shaft (2), with the pins (27) passing through the thickness of the body (5) in order to be fixed to it. We can also appreciate here the radial ducts for inserting the pins and for the set screws (26).

The shaft (2) in Figure 16 has its front portion screw-threaded (15) so that it can be operated by the cover (12), as well as the diametrical holes (29) for the passage of the pins (19) for the wedge (7).

The tubular body (5) in Figure 17 allows us to appreciate its front screw-threaded portion (21) when it is operated by the clamping tube (11), as well as the slots (30) to allow the axial play of the internal tube (5) and the movements of the wedge (8) releasing the pins (21); the holes (31) to allow the passage of the pins for the ring (4) and the slots (32) for the pin (19) of the wedge (7).

On the internal tube (6) shown in Figure 18, the front end (33) for fixing to the support (9), the slots (34) for the play of the pins (21) of the wedge (8) and the slots (35) for the play of the pin (19) of the wedge (8) are represented.

As far as the ring (4) in Figure 19 is concerned, it shows the corresponding holes (38) for the passage of the different pins (27) that fix the ring to the tubular body (5).

The cross section view of one of the segments (1) in Figure 20 shows the lugs (28) that clasp the to be located in the space (39), the holes (37) for the pins of the said ring, the inner surface (42, 45) on which the wedges (7, 8) act and the slots for the flexible seals (18).

The wedge (8) in Figure 21 makes it possible to appreciate its outer profile (43, 44) for it to slide on the inner surface (42, 45) of the segment (1) and also the holes (36) for the pins for fixing to the internal tube (5).

In the same way, the wedge (7) is shown in Figure 22, which is connected to the shaft (2), and has only the two diametrically opposite holes (40) for the insertion of the pin (19) that fixes it to the shaft (2).

The devices that form the physical means can be heated in order to adapt their temperature to that of the medium in which they are being used, both at the start of the coming into operation and during the course of the different sequences and, for this purpose, the appropriate means will be determined and provided.

## Claims

1. Method for manufacturing a plastic structure (A,C) including a generally thin and metallic tube (24) to be overmoulded, comprising the steps of:
- providing means in the interior of the tube to withstand during overmoulding the external pressure exerted by the plastic material to keep the shape of the tube inalterable and to close the ends of the tube so as to prevent entry of plastic material into the tube;
- housing in the interior of a mould and arranging on supports the tube to be overmoulded;
- filling the mould with plastic material in order to obtain the plastic structure (A,C) including the tube (24) which is fastened to said structure, the interior of the tube being completely free of any plastic material after its overmoulding due to its closing during the plastic material filling process
- maintaining the application of the means to withstand the external pressure of the plastic material until the plastic part has been cooled; and
- once the part has been finished removing from the tube the means to withstand the external pressure of the plastic material.

2. Method according to claim 1 wherein the means to maintain the shape of the tube unalterable are applied during the moulding and during a part, at least, of the polymerisation of the plastic mass.

3. Method according to claim 1 wherein the means to maintain the shape of the tube unalterable which are applied against the inner walls of the said tube consist of mechanical items or elements that fit or adapt to the said walls during the phases of plastic entry into the mould and during cooling.

4. Method according to claim 1 wherein the means to maintain the shape of the tube unalterable which are applied against the wall of the said tube consist of a fluid in the interior of the said tube, the fluid being subjected to a pressure which is transmitted to the inner walls of the tube.

5. Method according to claim 3 wherein the mechanical items or elements that fit or adapt to the inner walls of the tube are operated by mechanical systems.

6. Method according to claim 3 wherein the mechanical items or elements that fit or adapt to the inner walls of the tube are operated by a fluid received in a hose.

7. Device for maintaining the shape or geometry of a tube (24) housed in the interior of a mould and arranged on supports in the said mould, the tube being at least partially overmoulded on its exterior with plastic material according to the method defined in any one of the preceding claims so as to obtain a plastic structure (A,C) with the tube included inside this structure, comprising physical means in the interior of the tube (24) to be overmoulded, said physical means being adapted to fit against the inner wall of the said tube such as to maintain a pressure on the said wall during the overmoulding and during at least one phase of the polymerisation of the plastic mass.

8. Device according to claim 7 wherein the physical means consist of:
- a mandrel composed of a tubular body (5) secured on one end to a hollow support (9), an internal tube (6) concentric with the former that goes through the support, a central shaft (2) concentric with the tube and tubular body that also goes through the support, and protrudes from the latter a greater distance than the internal tube (6),
- the ends of the tube (6) and the shaft (2) being provided with screw threads in different directions,
- a closure part (10) which is adapted by way of a ring to be turned on the front part of the hollow support (9) onto which is fixed the end of a clamping tube (11), the front end of the clamping tube receiving a cover (12) provided with a neck which is housed partially in the interior of the clamping tube,
- the neck of the cover (2) being screw-threaded and receiving the end of the shaft (2), while the interior of the clamping tube (11) is also screw-threaded and receives the end of the internal tube (6),
- the tubular body (5) receiving a pair of cylindrical sliding wedges (7, 8), secured to the shaft (2) and to the internal tube (6), respectively, by means of pins (19, 21) passing through longitudinal slots cut in the body (5), internal tube (5) and shaft (2),
- cylindrical rings (4) being fitted to the tubular body (5) between each two wedges with these rings being secured to the said body,
- segments (1) clasping each pair of wedges (7, 8) and each ring (4), said segments having an external circular shape and covering, between them, practically the entire circumference, said segments being secured in a floating manner to the ring (4),
- the segments (1) of each group having on their interior centred protruding lugs (28) that clasp the sides of the ring (4) and inclined surfaces (25) along the longitudinal axis on which the wedges slide, said inclined surfaces increasing in diameter starting from the lugs,
- two centred transversal slots (18) cut in each group of segments which receive ring seals acting as springs.

9. Device according to claim 8, wherein the shaft (2) and the internal tube (6) are each operated directly by pneumatic or hydraulic cylinders which are connected to them from a common base.

10. Device according to claims 7 and 8, wherein the internal assembly is replaced by a flexible hose with the segments (1) connected to its exterior, said hose receiving a fluid in its interior to dilate or expand it, said hose being pressurised or depressurised for its fixing or extraction.

11. Device according to claim 7, wherein the physical means consist of a fluid under pressure, liquid or gas, housed directly in the interior of the tube (24) during the treatment phase.

## Patentansprüche

1. Methode zur Herstellung einer plastischen Struktur (A, C), die ein im Allgemeinen dünnes und metallisches Rohr (24) umfasst, das umspritzt werden soll, und aus folgenden Schritten besteht:
- die Bereitstellung von Hilfsmitteln im Inneren des Rohrs, die während der Umspritzung dem äußeren Druck standhält, der durch das plastische Material erzeugt wird, um die Form des Rohrs unverändert zu halten und die Enden des Rohrs zu schließen, so dass das Eindringen von plastischem Material in das Rohr verhindert wird;
- den Einbau einer Pressform im Inneren und die Anordnung auf Halterungen, damit das Rohr umspritzt werden kann;
- die Füllung der Pressform mit plastischem Material, um die plastische Struktur (A, C) zu erzielen, einschließlich des Rohrs (24), das an besagter Struktur befestigt wird, wobei das Innere des Rohrs nach dessen Umspritzung vollständig frei von allem plastischen Material ist, und zwar auf Grund seiner Schließung während des Prozesses der Füllung mit plastischem Material.
- die Beibehaltung der Anwendung der Hilfsmittel, die dazu dienen, um dem äußeren Druck des plastischen Materials standzuhalten, bis das plastische Teil abgekühlt ist, und
- sobald das Teil festig gestellt ist, die Entfernung der Hilfsmittel, die dazu dienen, um dem äußeren Druck des plastischen Materials standzuhalten.

2. Methode entsprechend dem Anspruch 1, bei der die Hilfsmittel, die dazu dienen, um die Form des Rohres unverändert zu erhalten, während der Formung angewandt werden und während mindestens eines Abschnitts der Polymerisierung der plastischen Masse.

3. Methode entsprechend dem Anspruch 1, bei der die Hilfsmittel, die dazu dienen, um die Form des Rohres unverändert zu erhalten, die gegen der Innenwände besagten Rohrs angewandt werden, aus mechanischen Vorrichtungenn oder Elementen bestehen, die während der Phasen, wenn Plastik in das Formteil eintritt sowie während der Kühlung in besagte Wände passen oder sich anpassen.

4. Methode entsprechend dem Anspruch 1, bei der die Hilfsmittel, die dazu dienen, um die Form des Rohres unverändert zu erhalten, und die gegen der Innenwände besagten Rohrs angewandt werden, aus einer Flüssigkeit im Inneren besagten Rohrs bestehen, wobei die Flüssigkeit einem Druck ausgesetzt wird, der auf die Innenwände des Rohrs übertragen wird.

5. Methode entsprechend dem Anspruch 2, bei der die mechanischen Vorrichtungen oder Elemente, die in der Innenwände des Rohrs passen oder sich anpassen, durch mechanische Systeme betrieben werden.

6. Methode entsprechend dem Anspruch 2, bei der die mechanischen Vorrichtungen oder Elemente, die in der Innenwände des Rohrs passen oder sich anpassen, durch eine Flüssigkeit betrieben werden, die in einem Schlauch untergebracht ist.

7. Vorrichtung zur Erhaltung der Form oder Geometrie eines Rohrs (24), das im inneren einer Form untergrbracht ist und auf Halterungen in besagter Form angeordnet ist, wobei das Rohr mindestens teilweise auf seinem Äußeren mit plastischem Material umspritzt wird, und zwar entsprechend der Methode, die in jedem einzelnen der vorangehenden Ansprüche beschrieben ist, um eine plastische Struktur (A, C) zu erzielen, wobei das Rohr innerhalb dieser Struktur eingeschlossen ist, einschließlich physischer Hilfsmittel im Inneren des Rohrs (24), das umspritzt werden soll, und besagte hysischen Hilfsmittel angepasst werden, um gegen die Innenwand besagten Rohrs zu passen, so dass während der Umspritzung und während mindestens einer Phase der Polymerisation der plastischen Masse der Druck auf besagte Wand beibehalten wird.

8. Vorrichtung entsprechend Anspruch 7, mit einem physisches Hilfsmittel, das sich zusammmensetzt aus:
- einem Dom, der aus einem rohrförmigen Körper (5) besteht, das an einem Ende an einer hohlen Halterung (9) befestigt ist, einem inneren Rohr (6), das konzentrisch zu dem vorgenannten Rohr ist , und das durch die Halterung verläuft, ein zentraler Schaft (2), der konzentrisch zu dem Rohr und dem rohrförmigen Körper ist, und das ebenfalls durch die Halterung verläuft und von Letzterer in einem größeren Abstand hervorsteht als das innere Rohr (6).
- die Enden des Rohrs (6) und der Schaft (2) sind dabei mit Schraubengewinden ausgestattet, die in verschiedenen Richtungen verlaufen.
- ein Schließungs-Teil (10), das angepasst wird in Form eines Ringes, der am vorderen Teil der hohlen Halterung (9) gedreht werden muss, auf dem das Ende eines Spannrohrs (11) befestigt ist, wobei das vordere Ende des Spannrohrs eine Abdeckung (12) aufnimmt, die mit einem Hals versehen ist, der teilweise im Inneren des Spannrohrs untergebracht ist.
- der Hals der Abdeckung (2) wird dabei verschraubt und nimmt das Ende des Schafts (2) auf, während das Innere des Spannrohrs (11) ebenfalls verschraubt wird und das Ende des inneren Rohrs (6) aufnimmt.
- das rohrförmige Körper (5) nimmt dabei ein Paar zylindrische, gleitende Keile (7, 8) auf, die an dem Schaft (2) bzw. an dem inneren Rohr (6) befestigt sind, und zwar mit Hilfe von Stiften (19, 21), die durch längsförmige Schlitze in dem Körper (5), dem inneren Rohr (5) und dem Schaft (2) verlaufen.
- zylindrische Ringe (4) werden dabei an das rohrförmige Körper (5) zwischen jeweils zwei Keile befestigt, und diese Ringe werden an besagtem Körper befestigt.
- die Abschnitte (1) von jeder Gruppe haben dabei in ihrem Inneren zentrierte hervorstehende Ansätze (28), welche die Seiten des Rings (4) und der geneigten Oberflächen (25) entlang der Längsachse festklammern, auf der die Keile gleiten, womit besagte geneigte Oberflächen in ihrem Durchmesser ansteigen, ausgehend von den Ansätzen.
- zwei zentrierte, quer verlaufende Schlitze (18), die in jede einzelne Gruppe von Abschnitten geschnitten sind, welche Ringdichtungen aufnehmen, die als Federn wirken.

9. Vorrichtung entsprechend dem Anspruch 8, bei der der Schaft (2) und das innere Rohr (6) jeweils direkt durch pneumatische oder hydraulische Zylinder betrieben werden, die mit ihnen von einer gemeinsamen Grundlauge aus verbunden sind.

10. Vorrichtung entsprechend den Ansprüchen 7 und 8, bei der die interne Anordnung durch einen flexiblen Schlauch ersetzt wird, wobei die Abschnitte (1) mit dessen Aüßerem verbunden sind und besagter Schlauch eine Flüssigkeit in seinem Inneren aufnimmt, damit diese sich ausdehnen kann, und besagter Schlauch zum Zwecke seiner Befestigung oder Herausnahme unter Druck gesetzt bzw. druckentlastet wird.

11. Vorrichtung entsprechend dem Anspruch 7, bei der die physischen Hilfsmittel aus einer Flüssigkeit unter Druck bestehen, flüssig oder gasförmig, die während der Phase der Behandlung direkt im Inneren des Rohres (24) untergebracht ist.

## Revendications

1. Méthode de fabrication d'une structure plastique (A, C) comprenant un tuyau métallique généralement fin (24) à surmouler, qui comprend les étapes suivantes :
- fournir des moyens à l'intérieur du tuyau pour supporter pendant le surmoulage la pression externe exercée par le matériau plastique et permettre que le tuyau conserve une forme inaltérable et fermer les extrémités du tuyau pour empêcher l'entrée de matériau plastique dans le tuyau :
- loger à l'intérieur d'un moule et disposer sur des supports le tuyau à surmouler ;
- remplir le moule de matériau plastique pour obtenir la structure plastique (A, C) y compris le tuyau (24) qui est fixé contre cette structure, l'intérieur du tuyau étant complètement débarrassé de matériau plastique après son surmoulage puisqu'il est fermé pendant l'opération de remplissage de matériau plastique.
- maintenir l'application en conservant la pression externe du matériau plastique jusqu'à ce que la pièce en plastique ait refroidi ; et
- une fois que la pièce est terminée enlever du tuyau les moyens qui permettent de maintenir la pression externe du matériau en plastique.

2. Méthode conformément à la revendication 1 dans laquelle les moyens de conserver la forme du tuyau inaltérable sont appliqués pendant le moulage et au moins pendant une partie de la polymérisation de la masse en plastique.

3. Méthode conformément à la revendication 1 dans laquelle les moyens de conserver la forme du tuyau inaltérable qui sont appliqués contre les parois internes de ce tube consistent en des éléments mécaniques qui s'adaptent à ces parois pendant les phases d'entrée du plastique dans le moule et pendant le refroidissement.

4. Méthode selon la revendication 1 dans laquelle les moyens de conserver la forme du tuyau inaltérable qui sont appliqués contre la paroi de ce tuyau consistent en un liquide à l'intérieur de ce tube, le liquide étant soumis à une pression qui est transmise sur les parois internes du tuyau.

5. Méthode selon la revendication 3 dans laquelle les éléments mécaniques qui s'adaptent aux parois intérieures du tuyau sont commandés par des systèmes mécaniques.

6. Méthode selon la revendication 3 dans laquelle les éléments mécaniques qui s'adaptent aux parois intérieures du tuyau sont commandés par un liquide reçu dans un tuyau.

7. Dispositif pour conserver la forme ou la géométrie d'un tuyau (24) logé à l'intérieur d'un moule et disposé sur des supports dans ce moule, le tuyau étant au moins partiellement surmoulé sur sa face extérieure avec du matériau plastique selon la méthode définie dans l'une des revendications précédentes, pour obtenir une structure plastique (A, C) avec le tuyau inclus dans cette structure, qui comprend des moyens physiques à l'intérieur du tuyau (24) à surmouler, ces moyens physiques étant adaptés pour se loger contre la paroi intérieure de ce tube afin de maintenir une pression sur cette paroi pendant le surmoulage et pendant au moins une phase de la polymérisation de la masse plastique.

8. Dispositif selon la revendication 7 dans lequel les moyens physiques consistent en :
- Un mandrin composé d'un corps tubulaire (5) fixé à une extrémité à un support creux (9), un tuyau interne (6) concentrique avec l'élément précédent qui passe par le support, un axe central (2) concentrique avec le tuyau et le corps tubulaire qui passe aussi dans le support et dépasse de ce dernier d'une plus grande longueur que le tuyau interne (6).
- Une partie de fermeture (10) qui est adaptée par une bague à tourner sur l'avant du support creux (9) sur lequel est fixée l'extrémité d'un tube de serrage (11), l'extrémité avant du tube de serrage accueillant un couvercle (12) muni d'un col qui est partiellement logé à l'intérieur du tube de serrage.
- Le col du couvercle (2) étant vissé au moyen d'une vis filetée accueille l'extrémité de l'axe (2), tandis que l'intérieur du tube de fixation (11) est aussi vissé et accueille l'extrémité du tuyau interne (6).
- Le corps tubulaire (5) accueillant deux coins de glissement cylindriques (7, 8), fixés sur l'arbre (2) et sur le tuyau interne (6), respectivement, au moyen de goupilles (19, 21) passant dans des encoches longitudinales pratiquées dans le corps (5), le tuyau interne (5) et l'axe (2),
- Des bagues cylindriques (4) étant logées dans le corps tubulaire (5) entre deux coins, ces bagues étant fixées sur ce corps,
- Des segments (1) qui fixent ces deux coins (7, 8) et chaque bague (4), ces segments ayant une forme extérieure circulaire et couvrant, à eux deux, pratiquement toute la circonférence, ces segments étant fixés de manière flottante à la bague (4).
- Les segments (1) de chaque groupe disposant dans leur partie intérieure de saillies (28) qui fixent les côtés de la bague (4) et des surfaces inclinées (25) le long de l'axe longitudinal sur lequel les coins glissent, le diamètre de ces surfaces inclinées augmentant à partir de ces saillies.
- Deux encoches transversales centrées (18) découpées dans chaque groupe de segments qui accueillent des joints annulaires qui agissent comme des ressorts.

9. Dispositif selon la revendication 8, dans lequel l'axe (2) et le tuyau interne (6) sont chacun commandés directement par des vérins pneumatiques ou hydrauliques reliés à ces éléments à partir d'une base commune.

10. Dispositif selon les revendications 7 et 8, dans lequel l'ensemble interne est remplacé par un tuyau flexible avec les segments (1) reliés à sa partie extérieure, ce tuyau recevant un liquide à l'intérieur pour le dilater ou l'étendre, ce tuyau étant sous pression ou sans pression pour le fixer ou l'extraire.

11. Dispositif selon la revendication 7, dans lequel les moyens physiques consistent en un liquide sous pression, liquide ou gaz, logé directement à l'intérieur du tuyau (24) pendant la phase de traitement.
